# FASCICULE DE BREVET EUROPEEN

(11) **EP 2 870 860 B1**
(45) Date de publication et mention de la délivrance du brevet: **23.08.2017**
(21) Numéro de dépôt: 14191862.3
(22) Date de dépôt: 05.11.2014
(51) Int. Cl.: A01G 13/00, A01G 27/00

(54) **Dispositif de paillage à réserve d'eau pour la culture de plantes, en particulier de plantes cultivées en pots**
Mulchvorrichtung mit Wasservorrat für den Anbau von Pflanzen, insbesondere Topfpflanzen
Mulching attachment with water reservoir for the cultivation of plants, especially potted plants

(30) Priorité: 07.11.2013 FR 1360887
(43) Date de publication de la demande: 13.05.2015
(73) Titulaire: Fevriero, Lucien, 13012 Marseille (FR)
(72) Inventeur: Fevriero, Lucien, 13012 Marseille (FR)
(74) Mandataire: Chevalier, Renaud Philippe

(56) Documents cités:
- WO-A1-98/02032
- WO-A1-98/53665
- FR-A1- 2 753 600
- FR-A5- 2 146 516
- US-A- 3 961 443
- US-A1- 2012 266 533
- US-B2- 7 707 768

## Description

La présente invention concerne le domaine de la culture de plantes.

Plus précisément, elle vise un dispositif dit de paillage pour la culture de plantes, en particulier de plantes cultivées en pots, pratiquée aussi bien par les professionnels (horticulteurs, pépiniéristes, maraîchers, services de création et d'entretien d'espaces verts, services de reboisement forestier, arboriculteurs fruitier, professionnels de la plantation de talus ou de vignes, ...) que par les particuliers. Toutefois, cette invention peut aussi être appliquée là la culture de plantes en pleine terre.

La culture de certaines plantes sur paillage est une pratique courante, le paillage ou paillis étant constitué par un cache de matériau protecteur naturel ou synthétique, posé sur le sol.

Les objectifs du paillage sont notamment :
- de ralentir la déshydratation de la terre ou autre substrat de culture induit par les effets asséchants de l'exposition au soleil et à certains vents, la présence du paillis augmentant la durée d'évaporation de l'eau et la durée d'humidification de la terre de culture, de sorte que les arrosages peuvent être réduits et moins fréquents, ce qui permet des économies d'eau ;
- de supprimer ou tout au moins limiter le développement des adventices, ce qui épargne des interventions de désherbage ;
- de contrarier la pousse et le développement des rejets ou drageons ;
- de permettre de protéger la terre de culture de l'action érosive du vent et de la pluie.

Dans les documents WO-98/02032, WO-98/53665, US-3.961.443 et FR-2.146.516, sont décrits des caches protecteurs plus spécialement destinés à être installés sur le bord supérieur des pots de plantation contenant des plantes à tiges ou arbustes.

Ces caches protecteurs ou paillages comprennent une surface de couverture perméable à l'eau, cette surface s'étendant autour d'une ouverture centrale, ladite surface de couverture comportant, d'une part, un rebord interne orienté vers le haut et, un rebord externe également orienté vers le haut, et, d'autre part, une retombée périphérique orientée vers le bas, les caches protecteurs annulaires ainsi conformés étant pourvus d'une fente radiale dont les bords peuvent être écartés pour donner accès à l'ouverture centrale, lors de l'installation du paillage à la partie supérieure du pot de culture.

Pour l'installation de ces paillages, il suffit d'écarter les bords de la fente radliale et d'engager la tige de la plante ou arbuste entre ces bords, jusqu'à ce que ladite tige se positionne dans l'ouverture centrale dudit paillage. On déplace enfin le paillage vers le bas de sorte à emboiter le rebord périphérique du paillage dans la partie supérieure du pot (FR-2146516), ou à coiffer le bord supérieur du pot au moyen du rebord périphérique orienté vers le bas dudit paillage (WO-98/02032, WO-98/53665, US-3.961.443).

Selon le document WO-98/53665, le collet de couverture comporte au voisinage de son bord périphérique, une gorge étroite et peu profonde munie de perforations, mais cette gorge qui, par ailleurs, n'est pas fermée à ses extrémités, ne peut constituer une réserve d'eau, ni à proprement parler un goutte à goutte. En effet, l'eau qui pénètre dans cette gorge, lors des arrosages, s'écoule quasi-instantanément de celle-ci par les perforations et les extrémités ouvertes de ladite gorge.

Il est également connu du document US-7.707.768 d'employer un dispositif comprenant une pièce inférieure en forme de couronne fendue, délimitant une chambre annulaire de retenue d'eau, et une pièce supérieure formant un couvercle plat et hermétique qui est vissé sur la pièce inférieure et qui a pour fonction de limiter l'évaporation de l'eau retenu dans la chambre annulaire de la pièce inférieure. Ce couvercle plat est équipé d'un embout de réception d'un tuyau d'arrosage. Ainsi, pour remplir la chambre annulaire de la pièce inférieure, il est nécessaire de brancher un tuyau d'arrosage adéquat sur l'embout, ce qui est clairement rédhibitoire pour des exploitants cultivant des centaines voire des milliers de plantes en pot. En outre, des eaux d'arrosage pulvérisées par le haut ou des eaux de pluie s'écouleraient sur le couvercle jusqu'à l'orifice central, conduisant à un arrosage directement sur le pied, sans goutte à goutte et sans répartition périphérique sur le pot, au détriment de la croissance de la plante.

Il est aussi connu du document US-3.961.443 un ancêtre du paillage en matière synthétique, constitué d'un élément circulaire comprenant une surface annulaire délimitée, d'une part, par un rebord périphérique et, d'autre part, par une ouverture centrale permettant de placer le paillage autour de la tige de la plante, cette surface annulaire étant elle-même constituée par une pluralité de marches annulaires dont le niveau décroit graduellement en direction de l'ouverture centrale. Les différentes marches annulaires sont munies de trous. Cependant, lorsque de l'eau est déversé sur l'élément circulaire (eaux de pluie ou eaux d'arrosage en hauteur), il est observé et bien connu que la quasi-totalité de cette eau est dirigée vers l'orifice centrale. Dans ces conditions, quelques gouttes seulement traversent les trous des marches annulaires.

Les paillages décrits dans les documents susmentionnés, ainsi que dans FR-2753600, vont dans le sens des objectifs que procurent les paillages classiques.

Toutefois, en ce qui concerne la déshydratation de la terre ou du substrat de culture, l'augmentation de la durée d'hurnidification que l'on peut attendre de l'utilisation de tels paillages, est insuffisante pour justifier l'utilisation d'un dispositif du genre décrit dans les documents ci-dessus, ce qui explique vraisemblablement leur absence sur les marchés.

L'invention a pour objet un dispositif de paillage qui, outre les autres avantages procurés par les paillages de l'état de la technique, permet d'allonger de manière beaucoup plus significative, la durée d'hydratation de la terre de culture ou du substrat, en particulier dans les domaines de la culture de plantes en pots.

Selon l'invention, la solution du problème posé est obtenue au moyen d'un dispositif de paillage comportant deux éléments coopérants superposés ou superposables, à savoir :
- d'une part, un paillage comprenant une surface de couverture et d'entourage opaque perméable à l'eau et s'étendant autour d'une ouverture centrale, ce paillage étant réalisé dans un matériau déformable et comportant une fente radiale permettant d'écarter ses extrémités pour autoriser son positionnement autour de la tige d'une plante, où le bord interne et le bord externe de la surface de couverture et d'entourage sont munis, respectivement, d'un rebord interne et d'un rebord externe, concentriques et orientés vers le haut, et,
- d'autre part, un système de goutte à goutte comprenant une chambre de rétention d'eau annulaire formant une réserve d'eau disposée au-dessous de la surface de couverture et d'entourage du paillage, cette chambre de rétention d'eau comprenant deux parois latérales, respectivement externe et interne, et un fond muni de perforations espacées, et notamment de diamètre réduit, ladite chambre de rétention d'eau étant alimentée par les eaux d'arrosage et/ou par les eaux de pluie traversant la surface de couverture et d'entourage dudit paillage, et elle présente une interruption ou coupure radiale permettant d'écarter ses extrémités, de façon à permettre son positionnement autour de la tige de ladite plante.

On comprend que ce dispositif de paillage procure les avantages attendus d'un paillis ou paillage classique avec pour avantage supplémentaire important, d'allonger, de manière significative, la durée d'hydratation de la terre de culture. Lorsque de l'eau est déversé sur le paillage, cette eau ne peut s'écouler qu'à travers la surface perméable de couverture et d'entourage, remplissant ainsi la chambre de rétention d'eau située en-dessous, et cela sans s'écouler à travers l'orifice central du paillage.

Un autre avantage procuré par l'invention est constitué par l'obtention d'un développement harmonieux de leur système racinien, en raison de la bonne répartition des eaux d'arrosage sur la terre de culture.

Selon un mode d'utilisation particulièrement visé, l'ensemble constitué du paillage et de la chambre de rétention d'eau superposés, est conforme pour permettre son positionnement sur ou dans le partie supérieure d'un pot de culture.

Selon un mode de réalisation avantageux, le paillage est réalisé dans un matériau flexible, à mémoire de forme.

Selon un autre mode d'exécution, la surface de couverture et d'entourage du paillage est réalisée dans un matériau imperméable et elle est munie de perforations lui conférant sa propriété de perméabilité à l'eau.

Selon un autre mode de réalisation, le bord de l'ouverture centrale et le bord périphérique du paillage sont dotés, respectivement, du rebord interne et du rebord externe, concentriques et orientés vers le haut.

Selon un autre mode de réalisation, le bord externe circonférentiel de la surface de couverture et d'entourage du paillage, est muni d'une retombée périphérique orientée vers le bas.

De manière avantageuse, la retombée périphérique présente une forme tronconique ou troncopyramidale évasée vers le bas, facilitant ainsi le positionnement sur le pot de culture.

Selon une autre disposition caractéristique, l'espace délimitant les bords supérieurs des parois latérales de la chambre de rétention d'eau du système de goutte à goutte, a une largeur identique ou sensiblement identique à la largeur du paillage.

Selon un autre mode d'exécution visant l'application de l'invention à des pots de forme conique, la paroi latérale externe de la chambre de rétention d'eau présente la forme d'un tronc de cône renversé, évasé vers le haut, dont les dimensions et l'angle d'inclinaison de la surface latérale, sont identiques aux dimensions et à l'angle d'inclinaison, respectivement, de la partie supérieure desdits pots.

Selon un autre mode de réalisation, la chambre de rétention du système de goutte à goutte est réalisée dans un matériau flexible, de préférence à mémoire de forme, permettant d'écarter ses extrémités pour créer un passage débouchant dans son ouverture centrale de façon à autoriser son positionnement autour de la tige d'une plante.

Selon un autre mode d'exécution avantageux, la chambre de rétention d'eau comprend encore un film auto-filtrant interne.

Selon une possibilité de l'invention, les extrémités de la surface de couverture et d'entourage séparées par la fente radiale sont chacune munies d'une paroi transversale d'obturation desdites extrémités, lesdites parois transversales d'obturation faisant saillie vers le haut de la surface de couverture et d'entourage et s'étendant entre les rebords interne et externe.

De cette manière, l'eau sur la surface de couverture ne peut pas s'échapper via la fente radiale, garantissant ainsi un écoulement à travers la seule surface de couverture.

Selon une autre possibilité de l'invention, les extrémités de la chambre de rétention d'eau séparées par la coupure radiale sont chacune munies d'une paroi transversale d'obturation desdites extrémités, lesdites parois transversales d'obturation faisant saillie vers le haut du fond de la chambre de rétention d'eau et s'étendent entre ses parois latérales interne et externe.

De cette manière, l'eau dans la chambre de rétention d'eau ne peut pas s'échapper via la coupure radiale, garantissant ainsi un écoulement maîtrisé en goutte à goutte à travers les perforations du fond.

Selon encore une autre possibilité, le dispositif de paillage comprend en outre au moins une réglette d'écartement, et le paillage comporte plusieurs supports conformés pour supporter des réglettes d'écartement, chaque support étant conformé pour maintenir fixe une extrémité d'une réglette d'écartement sur le paillage.

Ces caractéristiques et d'autres encore, ressortiront mieux de la description qui suit et des dessins annexés dans lesquels :
La figure 1 est une vue en perspective éclatée d'un exemple de réalisation du dispositif de paillage à réserve d'eau selon l'invention, avec illustrés le paillage (au-dessus) et le système de goutte à goutte (en-dessous) ;
La figure 2 est une vue en coupe éclatée de ce dispositif de paillage à réserve d'eau de la figure 1 ;
La figure 3 est une vue en perspective de l'élément supérieur du dispositif de paillage de la figure 1, cet élément supérieur étant appelé paillage ;
La figure 4 est une vue de dessus de l'élément supérieur formant paillage de la figure 3 ;
La figure 5 est une vue de dessous de l'élément supérieur formant paillage de la figure 3, lequel est représenté dans la position d'écartement de ses extrémités délimitées par la fente radiale ;
La figure 6 est une vue en coupe de l'élément supérieur dit paillage de la figure 3, selon la ligne 6-6 de la figure 4 ;

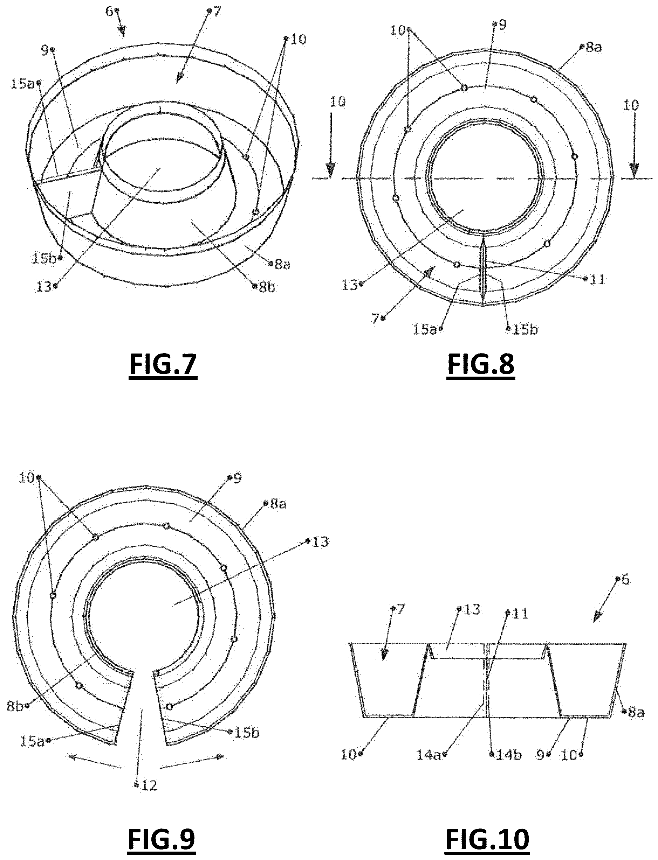

La figure 7 est une vue en perspective de l'élément inférieur du dispositif de paillage de la figure 1, cet élément inférieur étant constitué d'un système de goutte à goutte ;
La figure 8 est une vue de dessus de ce système de goutte à goutte de la figure 7 ;
La figure 9 est une vue de dessous de ce système de goutte à goutte de la figure 7, lequel est représenté dans la position d'écartement de ses extrémités délimitées par la coupure radiale ;
La figure 10 est une vue en coupe du système de goutte à goutte de la figure 7, selon la ligne 10-10 de la figure 8 ;
La figure 11 est une vue en coupe du dispositif de paillage à réserve d'eau de la figure 1, positionné sur la partie supérieure d'un pot de culture, autour de la tige d'une plante enracinée dans la terre de culture contenue dans ledit pot ;
La figure 12 est une vue en coupe montrant les deux éléments de la figure 1 (paillage et système de goutte à goutte) coopérants du dispositif de paillage à réserve d'eau superposés ;
La figure 13 est une vue en coupe analogue à la figure 10 illustrant un autre exemple de réalisation du système de goutte à goutte selon l'invention ;
La figure 14 est une vue en perspective analogue à la figure 3 illustrant un autre exemple de réalisation du paillage selon l'invention, incluant des supports à réglette d'écartement ;
La figure 15 est une vue en perspective à échelle agrandie illustrant un détail du paillage de la figure 14, et illustrant plus particulièrement un support à réglette prêt à recevoir une réglette d'écartement ;
La figure 16 est une vue en perspective de deux paillages identiques de la figure 14, maintenus écartés l'un de l'autre au moyen d'une réglette d'écartement coopérant avec leurs supports respectifs ;
La figure 17 est une vue en perspective analogue à celle de la figure 1 illustrant un autre exemple de dispositif de paillage à réserve d'eau selon l'invention, avec illustrés le paillage (au-dessus) et le système de goutte à goutte (en-dessous) ;
La figure 18 est une vue en coupe éclatée de ce dispositif de paillage à réserve d'eau de la figure 17; et
La figure 19 est une vue en coupe du dispositif de paillage à réserve d'eau de la figure 17, positionné sur la partie supérieure d'un pot de culture.

On se reporte auxdits dessins pour décrire un exemple de réalisation intéressant, bien que nullement limitatif, du paillage à goutte à goutte pour la culture de plantes, selon l'invention.

On précise que dans la présente description et dans les revendications, le terme "paillage" désigne un élément destiné à couvrir la terre ou le substrat de culture de plantes et capable de répondre aux objectifs visés par l'application des méthodes de culture de végétaux sur paillage.

D'autre part, l'emploi des termes et expressions tels que "horizontal", "vers le haut", "vers le bas", se réfère à la situation des éléments constitutifs de l'invention, lorsqu'ils sont installés dans leur position fonctionnelle.

Il est aussi observé que les pots de culture de plantes ornementales ont le plus souvent une section circulaire. Pour cette raison, les termes "anneau", "annulaire", "circulaire", ... sont utilisés pour la description des éléments constitutifs essentiels du dispositif revendiqué. Toutefois, l'emploi de ces termes ne doit pas être considéré comme restrictif, lesdits élements constitutifs pouvant avoir d'autres formes, par exemple une forme polygonale pour utilisation avec des pots de culture présentant une telle section.

L'invention a notamment pour objet un dispositif permettant de prolonger de manière significative la durée d'humidification des plantes, en particulier des plantes cultivées en pots. Toutefois, comme cela a déjà été indiqué, ce dispositif peut être utilisé pour la culture de plantes variées en pleine terre.

Le dispositif selon l'invention est notamment remarquable en ce qu'il comprend essentiellement deux éléments coopérants superposés ou superposables, à savoir:
- d'une part, un paillage 1 comprenant une surface de couverture et d'entourage circulaire 2 opaque, perméable à l'eau, cette surface 2 s'étendant autour d'une ouverture centrale 3, ce paillage 1 est réalisée dans un matériau flexible, de préférence à mémoire de forme, et il comporte une fente radiale 4 délimitant deux extrémités 2a, 2b qui peuvent être écartées l'une de l'autre pour ouvrir un passage 5 aboutissant dans l'ouverture centrale 3, et,
- d'autre part, un goutte à goutte 6 constitué par une chambre annulaire ou réserve d'eau 7 disposée au-dessous de la surface de couverture et d'entourage circulaire 2 du paillage, cette chambre annulaire 7 comprenant deux parois latérales espacées et concentriques 8a, 8b et un fond 9 muni de perforations espacées et de diametre réduit 10 permettant une évacuation goutte à goutte de l'eau, ladite chambre 7 étant alimentée par les eaux d'arrosage et/ou par les eaux de pluies traversant la surface de couverture horizontale 2 du paillage 1 ; la chambre annulaire 7 comportant une interruption ou coupure radiale 11 permettant d'écarter ses deux extrémités, de façon à ouvrir un passage 12 aboutissant à l'ouverture centrale 13 délimitée par ladite chambre annulaire ; dans ce but, la chambre annulaire perforée 7 est également réalisée dans un matériau flexible, de préférence à mémoire de forme ; d'autre part, les extrémités 14a, 14b de la chambre annulaire 7 séparées par la coupure radiale 11 sont chacune munies d'une paroi transversale, respectivement 15a, 15b, d'obturation desdites extrémités, de sorte que l'eau présente dans la réserve d'eau 7 du système de goutte à goutte 6 ne peut s'échapper qu'à travers les perforations 10 de celle-ci.

La surface de couverture et d'entourage 2 du paillage 1 peut être réalisée dans un matériau imperméable à l'eau et elle est munie de perforations rapprochées 18 lui conférant sa propriété de perméabilité à l'eau. Ces perforations 18 sont réparties en cercles à distance égale des bords interne et externe de la surface 2 constituant le paillage 1 proprement dit. Les perforations 18 ont un diamètre réduit, par exemple un diamètre de l'ordre de 5 mm.

De maniere avantageuse, le paillage 1 peut être exécuté en toute matière plastique semi-rigide, de préférence anti-UV, par exemple en polyéthylène basse densité (PEBD) ou polyéthylène haute densité (PEHD). Il présente, par exemple, une épaisseur de l'ordre de 1 à 2 mm.

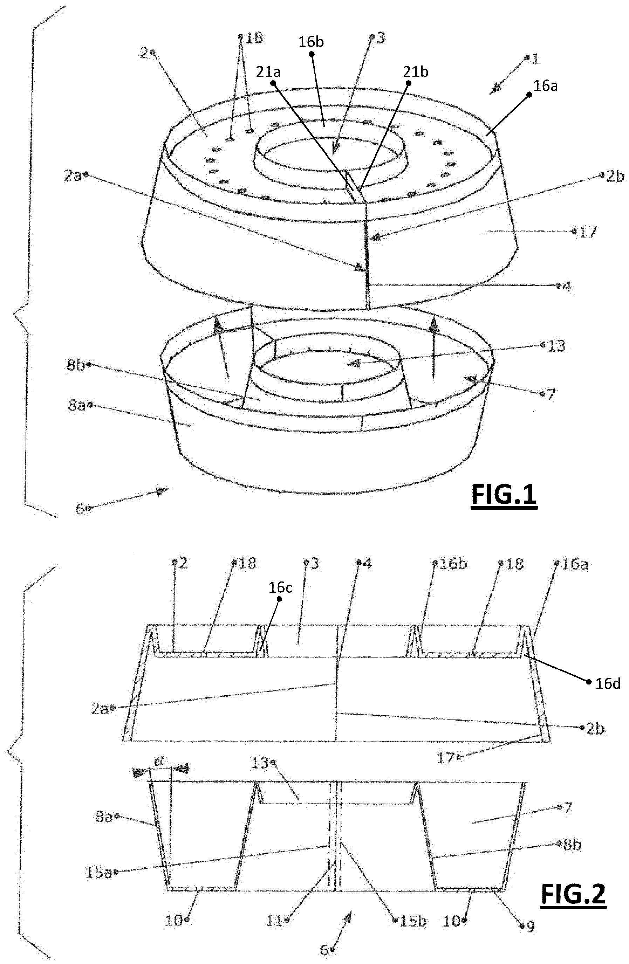

Comme visible sur la figure 1, les extrémités 2a, 2b de la surface de couverture et d'entourage circulaire 2 séparées par la fente radiale 4 sont chacune munies d'une paroi transversale 21 a, 21 b d'obturation desdites extrémités 2a, 2b, de sorte que l'eau présente sur la surface de couverture et d'entourage circulaire 2 ne peut pas s'échapper à travers cette fente radiale 4. Ces parois transversales 21 a, 21 b d'obturation font saillie vers le haut de la surface de couverture et d'entourage circulaire 2.

Les parois transversales d'obturation 15a, 15b de la chambre annulaire 7 font saillie vers le haut du fond 9. Ces parois transversales d'obturation 15a, 15b s'étendent entre les parois latérales 8a, 8b, et plus particulièrement rejoignent ces parois latérales 8a, 8b. Ainsi, les parois latérales 8a, 8b, avec les parois transversales d'obturation 15a, 15b, maintiennent l'eau dans la chambre annulaire 7, sur le fond 9, et l'eau ne peut alors que s échapper vers le bas via les perforations 10.

Selon l'exemple de réalisation illustré, le bord externe (ou bord périphérique) et le bord interne de la surface de couverture 2 du paillage 1 sont munis de rebords concentriques, respectivement 16a, 16b, orientés vers le haut ; la surface de couverture 2 étant plane, de forme annulaire et délimitée intérieurement par le rebord interne 16b et extérieurement par le rebord externe 16a. Ces rebords 16a, 16b ont, de préférence, une hauteur identique, par exemple une hauteur de l'ordre de 10 mm. Le rebord interne 16b s'étend sur le bord de l'ouverture centrale 3, tandis que le rebord externe 16a s'étend sur le bord périphérique du paillage 1.

Les parois transversales 21 a, 21 b d'obturation s'étendent entre les rebords 16a, 16b, et plus particulièrement rejoignent ces rebords 16a, 16b. Ainsi, les rebords 16a, 16b, avec les parois transversales 21 a, 21 b, maintiennent l'eau sur la surface de couverture 2 du paillage 1, cette eau ne pouvant alors que s'échapper vers le bas via les perforations 18.

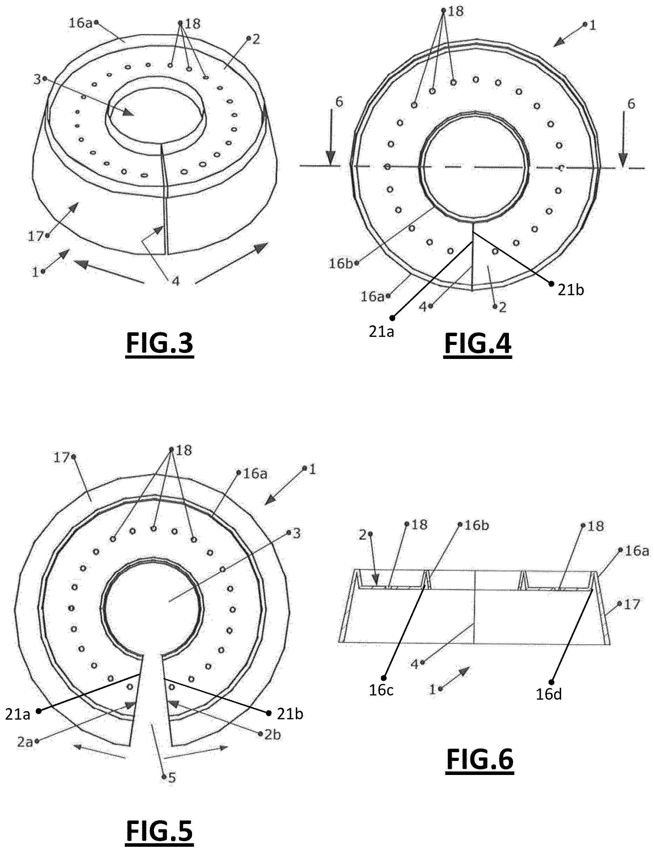

Comme visible sur les figures 2 et 6, le rebord interne 16b borde l'ouverture centrale 3 et présente une section radiale en U renversé, délimitant ainsi une gorge concentrique interne 16c sur le dessous du paillage 1.

D'autre part, le bord externe circonférentiel de la surface de couverture 2 du paillage 1 est muni d'une retombée périphérique 17 présentant, de préférence, une forme tronconique. Plus précisément, En outre, la retombée périphérique 17 présente une forme tronconique ou troncopyramidale évasée vers le bas. Cette retombée périphérique 17 prolonge vers le bas le rebord externe 16a. Cette retombée périphérique 17 permet de positionner le paillage 1 sur le bord de l'ouverture supérieure d'un pot de culture de plante P.

La partie supérieure de la retombée périphérique 17 présente une section en U renversé permettant d'accrocher le paillage 1 sur le bord supérieur P1 du pot de culture P et sert à maintenir ledit paillage à faible distance de la réserve d'eau sous-jacente du système de goutte à goutte. Autrement dit, la partie supérieure de la retombée périphérique 17 qui correspond au rebord externe 16a présente une section radiale en U renversé, délimitant ainsi une gorge concentrique externe 16d sur le dessous du paillage 1.

En considérant l'application de l'invention à des pots de culture P présentant la forme d'un cône renversé, correspondant à une grande majorité de pots offerts sur le marche, la réserve d'eau 7 a également, extérieurement, la forme d'un cône renversé dont les dimensions et l'angle d'inclinaison α de la surface latérale dudit cône sont identiques aux dimensions et à l'angle d'inclinaison α', respectivement, de la surface interne de la partie supérieure des pots auxquels est destiné le dispositif selon l'invention. Autrement dit, la paroi latérale externe 8a présente une forme tronconique, d'angle d'inclinaison α', évasée vers le haut. De la sorte, lorsque la réserve d'eau 7 du système de goutte à goutte 6 est introduite dans la partie supérieure d'un pot conique P, il se trouve bloqué dans ladite partie supérieure, lorsque la paroi latérale externe 8a de la réserve d'eau 7 vient épouser étroitement la paroi conique interne de ladite partie supérieure du pot P.

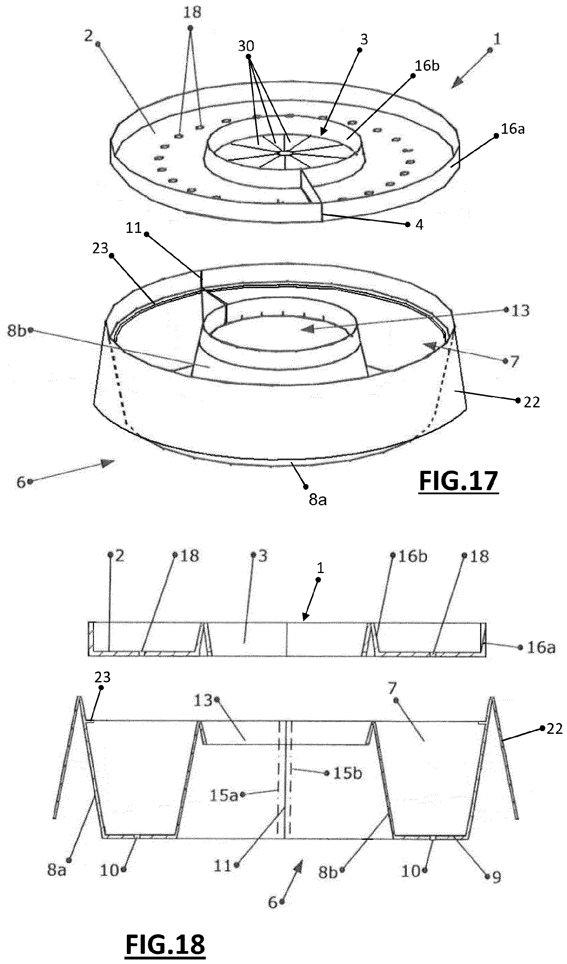

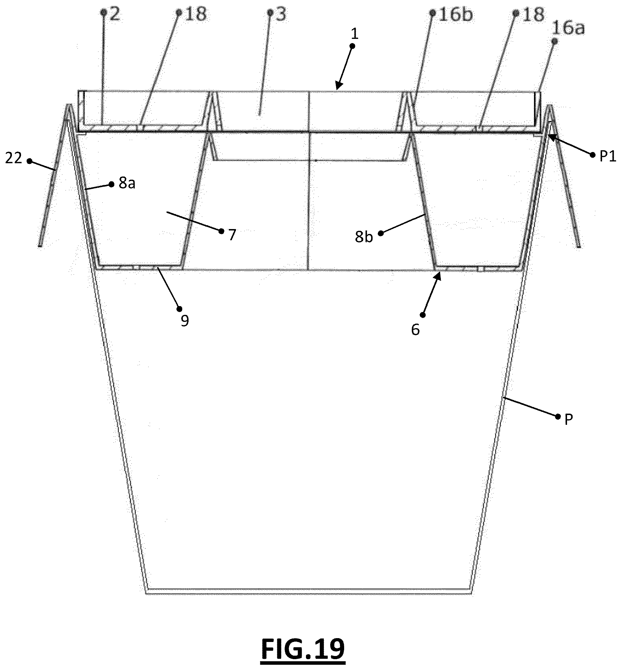

Selon un autre mode d'exécution, le bord supérieur de la paroi externe 8a de la réserve d'eau annulaire 7 est replié vers l'extérieur, de sorte à permettre son accrochage ou appui sur le bord supérieur P1 circulaire du pot de culture P. Ainsi, dans le mode de réalisation particulier illustré sur les figures 17 à 19, le bord supérieur de la paroi externe 8a est replié vers l'extérieur pour être prolongé par une jupe 22 externe de forme tronconique évasée vers le bas. En situation sur le pot de culture P, et comme illustré sur la figure 19, la paroi latérale externe 8a de la réserve d'eau 7 vient épouser étroitement la paroi conique interne de la partie supérieure du pot P, jusqu'à ce que le bord superieur P1 du pot de culture P vienne en butée contre la face interne de la jupe 22, assurant ainsi un appui du système de goutte à goutte 6 sur ce bord supérieur P1.

Dans ce mode de réalisation, il est envisageable que le paillage 1 vienne directement en appui sur le système de goutte à goutte 6. Pour cela, le bord externe circonférentiel de la surface de couverture 2 du paillage 1 n'est pas muni d'une retombée périphérique 17, et ce bord externe 2 est seulement bordé par le rebord externe 16a qui forme une couronne annulaire. Le système de goutte à goutte 6 présente alors un rebord interne 23, de forme annulaire, faisant saillie de la face interne de la paroi latérale externe 8a de la réserve d'eau 7 ; ce rebord interne 23 étant coplanaire avec le sommet circulaire de la paroi latérale interne 8b de la réserve d'eau 7. Ainsi, en situation sur le pot de culture P, et comme illustré sur la figure 19, le paillage 1 vient reposer à la fois sur ce rebord interne 23 et sur le sommet circulaire de la paroi latérale interne 8b.

Dans une variante non illustrée, le bord supérieur de la paroi externe 8a est replié vers l'extérieur pour être prolongé par un rebord externe annulaire, plat et horizontal.

Le fond 9 de la réserve d'eau 7 est muni d'un petit nombre de perforations 10, également réparties autour de l'ouverture centrale 13 de la réserve d'eau 7, par exemple de perforations 10 espacées d'environ 51°. Elles peuvent être disposées dans le milieu du fond 9, à égale distance des parois concentriques 8a, 8b. Ces dernières ont, par exemple, une hauteur de l'ordre de 50 mm. Cependant, la paroi interne 8b peut avoir une hauteur légèrement inférieure à celle de la paroi externe 8a, de sorte que si la réserve d'eau déborde, par exemple lors des arrosages, l'eau passe par-dessus la paroi interne 8b la moins haute et se déverse sur la terre de culture ; elle ne peut donc, de ce fait, s'échapper à l'extérieur du pot de culture P en franchissant la paroi externe 8a la plus haute. Les perforations 10 ont un diamètre réduit, par exemple un diamètre de l'ordre de 2 mm. Ces perforations 10 peuvent avoir une forme cylindrique ou une autre forme favorisant la formation lente de gouttes à la sortie desdites perforations, de sorte à maintenir, le plus longtemps possible, la terre ou le substrat S de culture à un taux d'humidification favorable à la croissance de la plante cultivée.

On comprend que pour positionner le dispositif, autour de la tige T d'une plante empotée PL, il suffit d'écarter les bords de la fente radiale 4 et de la coupure radiale 11, pour créer un passage permettant d'engager la tige de la plante entre ses bords écartés puis dans les ouvertures centrales 3 du paillage 1 et 13 du système de goutte à goutte 6 ; on relâche alors les bords de la fente 4 et la coupue 11 qui se referment automatiquement, compte tenu de l'élasticité des matériaux dans lesquels sont exécutés ledit paillage 1 et ledit système de goutte à goutte 6 ; le dispositif (paillage 1 et système de goutte à goutte 6) peut descendre et se bloquer sur ou dans la partie supérieure du pot de culture P.

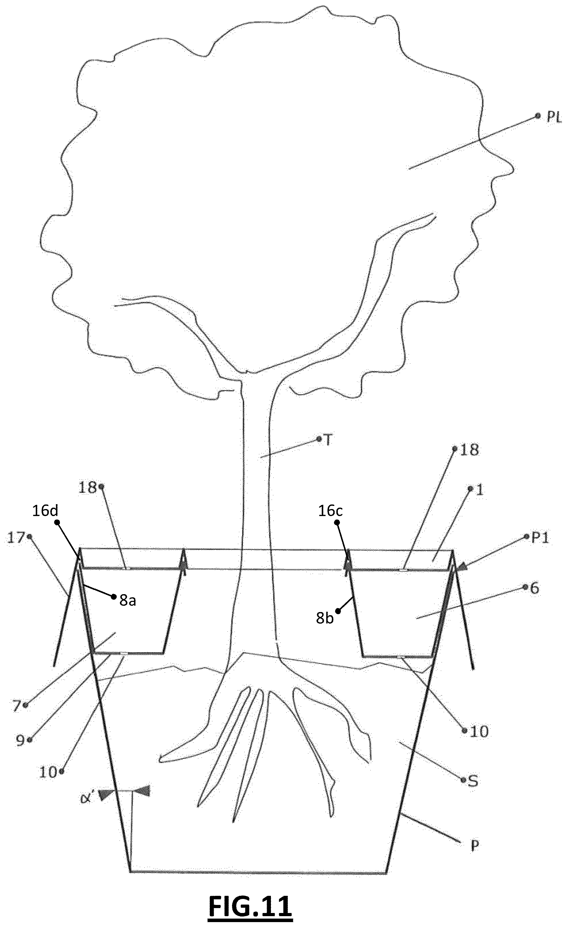

Comme visible sur la figure 11, le paillage 1 s'emboîte sur le système de goutte à goutte 6, et vient chapeauter ce dernier. Le paillage 1 se centre automatiquement sur le système de goutte à goutte 6 grâce à la forme tronconique de la retombée périphérique 17 qui guide le paillage 1 jusqu'à ce que, d'une part, la partie supérieure de la paroi interne 8b s'engage à l'intérieur de la gorge concentrique interne 16c, et, d'autre part, la partie supérieure de la la paroi externe 8a s'engage à l'intérieur de la gorge concentrique externe 16d. En situation sur le pot de culture P, le bord supérieur P1 du pot de culture P vient également s'engager à l'intérieur de la gorge concentrique externe 16d, favorisant ainsi le positionnement du paillage 1 sur le pot de culture P.

La chambre de rétention d'eau 7 ou réserve d'eau peut être cloisonnée, au moyen de cloisons s'étendant entre les parois latérales 8a, 8b, pour constituer une succession de godets disposés autour de son ouverture centrale 13. Il est ainsi possible de déposer un agent fertilisant ou un insecticide dans ces godets, lequel se trouve ainsi dilué et entraîne vers la terre de culture ou autre substrat de culture renfermé dans le pot. Les alvéoles des godets peuvent communiquer entre elles, par exemple par un orifice prévu en partie basse des cloisons.

L'ouverture centrale 3 du paillage et l'ouverture centrale 13 du système de goutte à goutte 6 peuvent comporter une échancrure, respectivement destinée à permettre le passage d'un tuteur au travers de ces échancrures alignées.

Le système de goutte à goutte 6 peut être réalisé en toute matière appropriée à son emploi. Par exemple, il peut être exécuté en toute matiere plastique convenable, de préférence anti-UV, identique ou non à celle dans laquelle est réalisé le paillage 1, c'est-à-dire, par exemple, en polyéthylène basse densité (PEBD) ou polyéthylène haute densité (PEHD).

La réalisation des dispositifs de l'invention en matière plastique, permet leur moulage en différents coloris permettant de les assortir à la couleur des pots de culture à l'équiipement desquels ils sont destinés.

Selon un autre mode d'exécution avantageux, la chambre de rétention d'eau ou réserve d'eau 7 comprend encore un film auto-filtrant 19 interne.

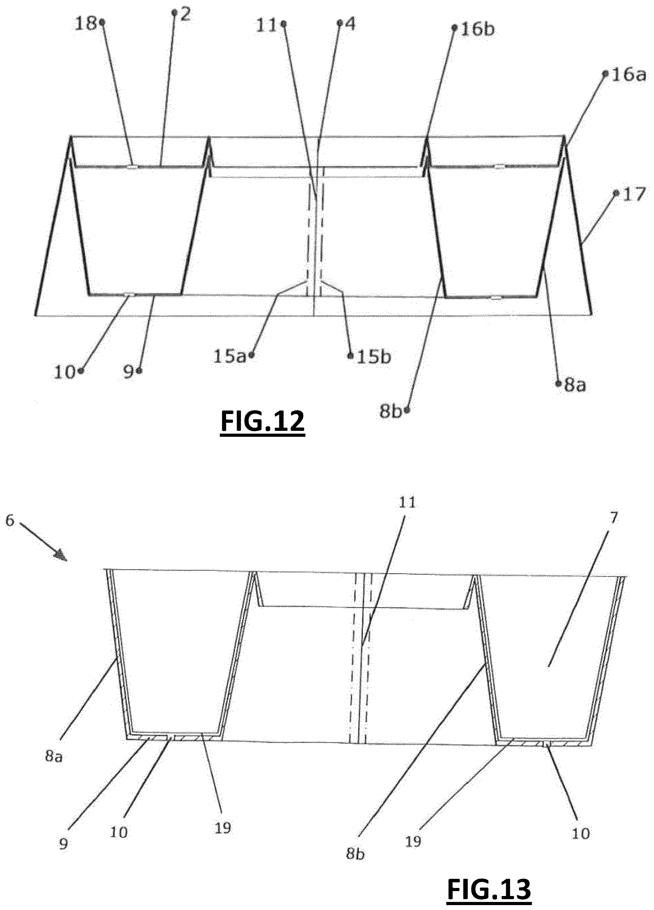

De préférence et selon l'exemple de réalisation illustré à la figure 13, ce film auto-filtrant présente la forme d'un tronc de cône renversé dont les dimensions et l'angle d'inclinaison de la surface latérale, sont identiques aux dimensions et à l'angle d'inclinaison α, respectivement, de la chambre de rétention d'eau ou réserve d'eau 7 du système de goutte à goutte 6 afin de permettre son installation à l'intérieur de ladite réserve d'eau.

Ce film auto-filtrant 19 permettant de réguler le goutte à goutte est constitué d'un filtre microporeux présentant un maillage plus ou moins grand selon la durée d'arrosage du goutte à goutte que l'on souhaite obtenir.

Le paillage proprement dit 1 et le système de goutte a goutte 6 selon l'invention peuvent être réalisés sous la forme d'un ensemble compact ; dans ce cas, la fente radiale 4 et la coupure radiale 11 sont nécessairement superposées.

Ils peuvent aussi, selon un autre mode de mise en oeuvre, être constitués de deux éléments séparables assemblés par les utilisateurs, lors de l'installation du dispositif sur les pots de culture. Dans ce cas, le paillage proprement dit et le système de goutte à goutte sont préférablement conformes pour permettre l'encastrement du premier dans le second et leur empilage, afin de favoriser le conditionnement des dispositifs et leur expédition aux circuits de vente ou d'utilisation.

Selon un mode d'execution simplifié, le dispositif de paillage à réserve d'eau selon l'invention, peut comporter:
- d'une part, un paillage constitué par un disque opaque et perméable à l'eau, ce disque réalisé dans un matériau flexible étant pourvu d'une ouverture centrale et d'une fente radiale permettant d'obtenir par écartement des extrémités délimitées par cette fente radiale, un passage donnant accès à l'ouverture centrale, et,
- d'autre part, un système de goutte à goutte comprenant une chambre annulaire de rétention d'eau ou réserve d'eau comprenant deux parois latérales et un fond muni de perforations espacées et de diametre réduit permettant une distribution goutte à goutte de l'eau contenue dans la réserve d'eau, la surface interne de la paroi périphérique de ladite réserve d'eau comportant, dans sa partie haute, une feuillure ou un épaulement circulaire permettant l'encastrement du paillage circulaire dans ladite partie haute, de sorte que le paillage se trouve disposé au-dessus de ladite réserve d'eau.

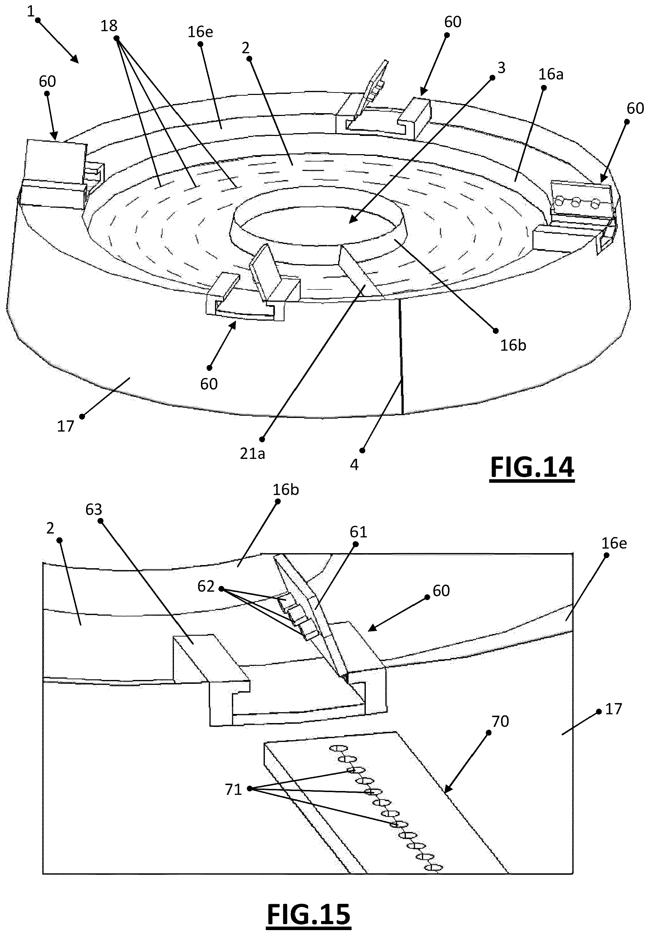

Dans un mode de réalisation particulier illustré sur les figures 14 à 16, le paillage 1 comporte plusieurs supports 60 conformés pour supporter des réglettes d'écartement 70. Ces supports 60 sont prévus sur le le bord externe circonférentiel de la surface de couverture 2 du paillage 1. Chaque support 60 est conformé pour maintenir fixe une réglette d'écartement 70 sur le paillage 1, et plus précisément pour fixer une extrémité de la réglette d'écartement 70, l'autre extrémité de la réglette d'écartement 70 étant elle-même fixée sur un autre paillage 1 adjacent et identique au moyen également d'un support 60. Ainsi, la réglette d'écartement 70 permet de maintenir un écartement fixe.

Autrement dit, la réglette d'écartement 70 est fixée à ses deux extrémités sur deux paillages 1 respectifs, ces paillages 1 étant eux-même montés sur des pots de culture P, de sorte que la réglette d'écartement 70 maintient un écartement fixe entre les paillages 1, et donc entre les pots de culture P. La réglette d'écartement 70 permet également, et surtout, de solidariser les pots de culture P adjacents entre eux, limitant ainsi les risques de chute des pots de culture P.

De façon avantageuse, le paillage 1 comporte au moins deux supports 60 disposés en vis-à-vis de part et d'autre de l'ouverture centrale 3. Ainsi, chaque paillage 1 peut être raccordé à deux paillages 1 adjacents via deux réglettes d'écartement 70, et il est donc possible de raccorder des pots de culture P disposés en ligne au moyen de réglettes d'écartement 70 fixés entre les pots de culture P.

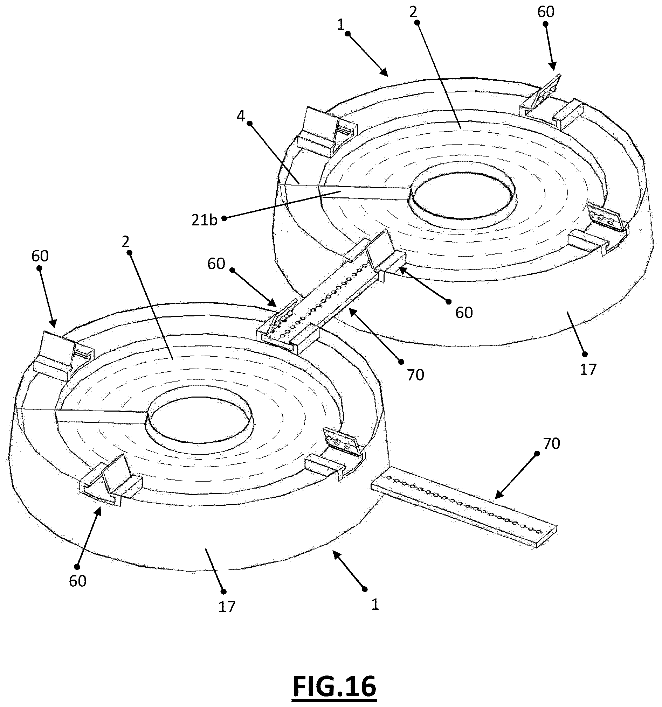

De façon encore avantageuse, le paillage 1 comporte quatre supports 60 répartis à 90° l'un de l'autre sur la périphérie externe de la surface de couverture 2, comme illustré sur les figures 14 et 16. Avec ces quatre supports 60, chaque paillage 1 peut être raccordé à quatre paillages 1 adjacents, et il est donc possible de raccorder des pots de culture P disposés à la fois en ligne et en colonne au moyen de réglettes d'écartement 70 fixés entre les pots de culture P.

Chaque support 60 peut être fixé sur une surface d'appui 16e formant un parapet horizontal et annulaire sur le dessus du rebord externe 16a. Chaque support 60 se présente sous la forme d'un étau ou mâchoire qui comprend, d'une part, une pièce statique 63 montée fixement sur la surface d'appui 16e, et, d'autre part, un volet de fermeture 61 monté mobile en rotation sur la pièce statique 63. La pièce statique 63 est de forme sensiblement complémentaire de l'extrémité de la réglette d'écartement 70, de sorte que la réglette d'écartement 70 est inséré dans ou sur la pièce statique 63, et le volet de fermeture 61, une fois rabattu, vient maintenir serré la réglette d'écartement 70.

Chaque réglette d'écartement 70 est pourvu de plusieurs orifices 71 répartis en ligne, et le volet de fermeture 61 supporte un ou plusieurs pions saillants 62 aptes à s'engager à l'intérieur des orifices 71 de la réglette d'écartement 70. Ainsi, il est possible de régler la position de la réglette d'écartement 70 en jouant sur la position des orifices 71 vis-à-vis des pions saillants 62. En variante, le volet de fermeture 61 est pourvu d'un ou plusieurs orifices et la réglette d'écartement 70 est pourvue de plusieurs pions saillants répartis en ligne et aptes à s'engager à l'intérieur du ou des orifices. Dans une autre variante, les pions ou orifices, prévus pour coopéer avec la réglette d'écartement 70, sont portés par la pièce statique 63 au lieu du volet de fermeture 61.

La réglette d'écartement 70 peut être plate, comme illustré sur la figure 16. Dans une variante non illustrée, la réglette d'écartement 70 présente une portion centrale en forme de U, de sorte que le bas de la réglette d'écartement 7 peut venir reposer sur le sol, permettant ainsi le passage entre les pots de culture, notamment pour une personne et/ou pour une brouette, sans barre suspendue en hauteur.

Comme illustré sur la figure 17, il est également envisageable que l'ouverture centrale 3 du paillage 1 soit équipée de volets internes 30 élastiquement déformables ; ces volets internes 30 étant réalisés dans une paroi d'obturation fine de l'ouverture centrale 30, dans laquelle sont prévues des coupures linéaires radiales délimitant les volets internes 30. Ces volets internes 30 freinent la pousse d'herbes autour de la tige de la plante, tout en autorisant le grossissement de cette tige, les volets internes 30 se déformant sous la poussée de la tige.

Il est également envisageable de fixer par encliquetage le paillage 1 sur le système de goutte à goutte 6. A cet effet, le paillage 1 comprendrait sur sa partie inférieure ou périphérique des organes d'encliquetage, et le système de goutte à goutte 6 comprendrait des organes d'encliquetage complémentaires propres à coopérer avec les organes d'encliquetage du paillage 1.

## Revendications

1. Dispositif de paillage à réserve d'eau pour la culture de plantes, en particulier de plantes élevées en pots, du type comprenant un paillage (1) comprenant une surface de couverture et d'entourage (2) opaque, perméable à l'eau et s'étendant autour d'une ouverture centrale (3), ce paillage (1) étant réalisé dans un matériau déformable et comportant une fente radiale (4) permettant d'écarter ses deux extrémités (2a, 2b) pour autoriser son positionnement autour de la tige (T) d'une plante (PL), où le bord interne et le bord externe de la surface de couverture et d'entourage (2) sont munis, respectivement, d'un rebord interne (16b) et d'un rebord externe (16a), concentriques et orientés vers le haut, ledit dispositif de paillage étant **caractérisé en ce qu'**il comprend un système de goutte à goutte coopérant de manière superposée ou superposable avec ledit paillage (1), où ledit système de goutte à goutte comprend une chambre de rétention d'eau (7) annulaire formant une réserve d'eau disposée au-dessous de la surface de couverture et d'entourage (2) du paillage (1), cette chambre de rétention d'eau (7) comprenant deux parois latérales, respectivement externe et interne (8a, 8b), et un fond (9) muni de perforations espacées (18),
ladite chambre de rétention d'eau (7) étant alimentée par les eaux d'arrosage et/ou par les eaux de pluie traversant la surface de couverture et d'entourage (2) dudit paillage (1), et elle présente une interruption ou coupure radiale (11) permettant d'écarter ses deux extrémités (14a, 14b), de façon à permettre son positionnement autour de la tige (T) de ladite plante (PL).

2. Dispositif de paillage à réserve d'eau, selon la revendication 1, **caractérisé en ce que** l'ensemble constitué du paillage (1) et de la chambre de rétention d'eau (7) superposés, est conforme pour permettre son positionnement dans ou sur la partie supérieure d'un pot de culture.

3. Dispositif de paillage à réserve d'eau, selon l'une des revendications 1 ou 2, **caractérisé en ce que** le paillage (1) est réalisé dans un matériau flexible à mémoire de forme.

4. Dispositif de paillage à réserve d'eau, suivant l'une quelconque des revendications 1 à 3, **caractérisé en ce que** la surface de couverture et d'entourage (2) dudit paillage (1) est réalisée dans un matériau imperméable et **en ce qu'**elle est munie de perforations (18) lui conférant sa propriété de perméabilité à l'eau.

5. Dispositif de paillage à réserve d'eau, selon l'une quelconque des revendications 1 à 4, **caractérisé en ce que** le bord de l'ouverture centrale (3) et le bord périphérique du paillage (1) sont dotés, respectivement, du rebord interne (16b) et du rebord externe (16a), concentriques et orientés vers le haut.

6. Dispositif de paillage à réserve d'eau, selon l'une quelconque des revendications 1 a 5, **caractérisé en ce que** le bord externe circonférentiel de la surface de couverture et d'entourage (2) du paillage (1), est muni d'une retombée périphérique (17) orientée vers le bas.

7. Dispositif de paillage à réserve d'eau, selon la revendication 6, **caractérisé en ce que** la retombée périphérique (17) présente une forme tronconique ou troncopyramidale évasée vers le bas.

8. Dispositif de paillage à réserve d'eau, selon l'une quelconque des revendications 1 à 7, **caractérisé en ce que** l'espace délimitant les bords supérieurs des parois latérales (8a, 8b) de la chambre de rétention d'eau (7) du système de goutte à goutte (6), a une largeur identique ou sensiblement identique à la largeur de la surface de couverture et d'entourage (2) dudit paillage (1).

9. Dispositif de paillage à réserve d'eau, selon l'une quelconque des revendications 1 a 8, utilisable en relation avec des pots de culture de forme tronconique, **caractérisé en ce que** la paroi latérale externe (8a) de la chambre de rétention d'eau (7) du système de goutte à goutte (6) présente la forme d'un tronc de cône renversé, évasé vers le haut, dont les dimensions et l'angle d'inclinaison (α) de sa surface latérale, sont identiques aux dimensions et à l'angle d'inclinaison (α'), respectivement, du tronc de cône renversé délimité par la paroi interne de la partie supérieure desdits pots.

10. Dispositif de paillage à réserve d'eau, suivant l'une quelconque des revendications 1 à 9, **caractérisé en ce que** la chambre de rétention d'eau (7) du système de goutte à goutte (6) est réalisée dans un matériau flexible, de préférence à mémoire de forme, permettant d'écarter ses extrémités (14a, 14b) pour créer un passage débouchant dans son ouverture centrale, de façon à autoriser son positionnement autour de la tige (T) d'une plante (PL).

11. Dispositif de paillage à réserve d'eau, suivant l'une quelconque des revendications 1 à 10, **caractérisé en ce que** la chambre de rétention d'eau (7) comprend encore un film auto--filtrant (19) interne.

12. Dispositif de paillage à réserve d'eau, selon l'une quelconque des revendications 1 à 11, **caractérisé en ce que** les extrémités (2a, 2b) de la surface de couverture et d'entourage (2) séparées par la fente radiale (4) sont chacune munies d'une paroi transversale (21 a, 21 b) d'obturation desdites extrémités (2a, 2b), lesdites parois transversales (21 a, 21 b) d'obturation faisant saillie vers le haut de la surface de couverture et d'entourage (2) et s'étendant entre les rebords interne et externe (16a, 16b).

13. Dispositif de paillage à réserve d'eau, selon l'une quelconque des revendications 1 à 12, **caractérisé en ce que** les extrémités (14a, 14b) de la chambre de rétention d'eau (7) séparées par la coupure radiale (11) sont chacune munies d'une paroi transversale (15a, 15b) d'obturation desdites extrémités (14a, 14b), lesdites parois transversales d'obturation (15a, 15b) faisant saillie vers le haut du fond (9) de la chambre de rétention d'eau (7) et s'étendent entre ses parois latérales interne et externe (8a, 8b).

14. Dispositif de paillage à réserve d'eau, selon l'une quelconque des revendications 1 à 13, **caractérisé en ce qu'**il comprend en outre au moins une réglette d'écartement (70), et **en ce que** le paillage (1) comporte plusieurs supports (60) conformés pour supporter des réglettes d'écartement (70), chaque support (60) étant conformé pour maintenir fixe une extrémité d'une réglette d'écartement (70) sur le paillage (1).

15. Dispositif de paillage à réserve d'eau, selon l'une quelconque des revendications 1 à 4 et 7 à 14, **caractérisé en ce que** ledit dispositif comporte :
- d'une part, un paillage constitué par un disque opaque et perméable à l'eau, ce disque réalisé dans un matériau flexible étant pourvu d'une ouverture centrale et d'une fente radiale permettant d'établir par écartement des extrémités délimitées par cette fente radiale, un passage donnant accès à l'ouverture centrale, et,
- d'autre part, un système de goutte à goutte comprenant une chambre annulaire de rétention d'eau ou réserve d'eau comprenant deux parois latérales et un fond muni de perforations espacées et de diamètre réduit, la paroi interne de ladite chambre comportant dans sa partie haute une feuillure ou un épaulement circulaire permettant l'encastrement du paillage circulaire dans ladite partie haute, de sorte que le paillage se trouve disposé au-dessus de ladite réserve d'eau.

## Patentansprüche

1. Mulcheinrichtung mit Wasservorrat für die Pflanzenkultur, im Speziellen für in Töpfen gezogene Pflanzen, in der Art einen Mulch (1) umfassend, der eine lichtdichte, wasserdurchlässige Abdeck- und Umschließungsfläche (2) umfasst, und die sich um eine zentrale Öffnung (3) erstreckt, wobei dieser Mulch (1) aus einem verformbaren Material gefertigt ist und einen radialen Spalt (4) umfasst, anhand dessen seine beiden Enden (2a, 2b) abgespreizt werden können, um seine Positionierung um den Stiel (T) einer Pflanze (PL) zu erlauben, wobei der innere Rand und der äußere Rand der Abdeck- und Umschließungsfläche (2) jeweils mit einer inneren Randleiste (16b) und einer äußeren Randleiste (16a), konzentrisch und nach oben gerichtet, versehen sind, wobei die besagte Mulcheinrichtung **dadurch gekennzeichnet ist, dass** sie ein Tropfbewässerungssystem umfasst, das überlagert oder überlagerbar mit dem besagten Mulch (1) zusammenwirkt, wobei das besagte Tropfbewässerungssystem eine ringförmige Wasserrückhaltekammer (7) umfasst, die einen Wasservorrat bildet, der unterhalb der Abdeck- und Umschließungsfläche (2) des Mulchs (1) angeordnet ist, wobei diese Wasserrückhaltekammer (7) zwei jeweils äußere und innere (8a, 8b) Seitenwände umfasst, und einen Boden (9), der mit im Abstand angeordneten Perforationen (18) versehen ist,
wobei die besagte Wasserrückhaltekammer (7) durch die Gießwässer und/ oder die Regenwässer versorgt wird, welche die Abdeck- und Umschließungsfläche (2) des besagten Mulchs (1) durchlaufen und sie eine radiale Unterbrechung oder Trennung (11) aufweist, anhand derer ihre beiden Enden (14a, 14b) abgespreizt werden können, um ihre Positionierung um den Stiel (T) der besagten Pflanze (PL) zu erlauben.

2. Mulcheinrichtung mit Wasservorrat nach Anspruch 1, **dadurch gekennzeichnet, dass** die Einheit, die aus dem überlagerten Mulch (1) und der Wasserrückhaltekammer (7) gebildet wird, konform ist, um ihre Positionierung in oder auf einem Oberteil eines Pflanztopfes zu ermöglichen.

3. Mulcheinrichtung mit Wasservorrat nach einem der Ansprüche 1 oder 2, **dadurch gekennzeichnet, dass** der Mulch (1) aus einem flexiblen Material mit Formgedächtnis gefertigt ist.

4. Mulcheinrichtung mit Wasservorrat nach einem der Ansprüche 1 bis 3, **dadurch gekennzeichnet, dass** die Abdeck- und Umschließungsfläche (2) des besagten Mulchs (1) aus einem undurchlässigen Material gefertigt ist und dadurch, dass sie mit Perforationen (18) versehen ist, die ihr die Eigenschaft der Wasserdurchlässigkeit verleihen.

5. Mulcheinrichtung mit Wasservorrat nach einem der Ansprüche 1 bis 4, **dadurch gekennzeichnet, dass** der Rand der zentralen Öffnung (3) und der umlaufende Rand des Mulchs (1) jeweils mit einer internen Randleiste (16b) und einer externen Randleiste (16a), konzentrisch und nach oben gerichtet, versehen sind.

6. Mulcheinrichtung mit Wasservorrat nach einem der Ansprüche 1 bis 5, **dadurch gekennzeichnet, dass** der umlaufende externe Rand der Abdeck- und Umschließungsfläche (2) des Mulchs (1) mit einer nach unten orientierten umlaufenden Schürze (17) versehen ist.

7. Mulcheinrichtung mit Wasservorrat nach Anspruch 6, **dadurch gekennzeichnet, dass** die umlaufende Schürze (17) eine kegel- oder pyramidenstumpfförmige Form aufweist, die nach unten ausgestellt ist.

8. Mulcheinrichtung mit Wasservorrat nach einem der Ansprüche 1 bis 7, **dadurch gekennzeichnet, dass** der Raum, der die oberen Ränder der Seitenwände (8a, 8b) der Wasserrückhaltekammer (7) des Tropfbewässerungssystems (6) eingrenzt, eine identische oder in etwa identische Breite, wie die Breite der Abdeck- und Umschließungsfläche (2) des besagten Mulchs (1) aufweist.

9. Mulcheinrichtung mit Wasservorrat nach einem der Ansprüche 1 bis 8, verwendbar in Verbindung kegelstumpfförmigen Pflanztöpfen, **dadurch gekennzeichnet, dass** die externe Seitenwand (8a) der Wasserrückhaltekammer (7) des Tropfbewässerungssystems (6) die Form eines Stumpfes eines umgekehrten, nach oben ausgestellten Konus aufweist, von dem die Abmessungen und der Neigungswinkel (α) seiner Seitenfläche identisch jeweils den Abmessungen und dem Neigungswinkel (α') des Stumpfes eines umgekehrten Konus sind, der durch die Innenwand des oberen Abschnitts der besagten Töpfe eingegrenzt wird.

10. Mulcheinrichtung mit Wasservorrat nach einem der Ansprüche 1 bis 9, **dadurch gekennzeichnet, dass** die Wasserrückhaltekammer (7) des Tropfbewässerungssystems (6) aus einem flexiblen Material, vorzugsweise mit Formgedächtnis gefertigt ist, anhand dessen ihre beiden Enden (14a, 14b) abgespreizt werden können, um ihre Positionierung um den Stiel (T) der besagten Pflanze (PL) zu erlauben.

11. Mulcheinrichtung mit Wasservorrat nach einem der Ansprüche 1 bis 10, **dadurch gekennzeichnet, dass** die Wasserrückhaltekammer (7) noch eine interne selbstfilternde Folie (19) umfasst.

12. Mulcheinrichtung mit Wasservorrat nach einem der Ansprüche 1 bis 11, **dadurch gekennzeichnet, dass** die Enden (2a, 2b) der Abdeck- und Umschließungsfläche (2), die durch den radialen Spalt (4) voneinander getrennt sind, jeweils mit einer querlaufenden Wand (21 a, 21 b) zum Verschließen der besagten Enden (2a, 2b) versehen sind, wobei die besagten querlaufenden Wände (21 a, 21 b) zum Verschließen nach oben über die Abdeck- und Umschließungsfläche (2) überstehen und sich zwischen den inneren und äußeren Randleisten (16a, 16b) erstrecken.

13. Mulcheinrichtung mit Wasservorrat nach einem der Ansprüche 1 bis 12, **dadurch gekennzeichnet, dass** die Enden (14a, 14b) der Wasserrückhaltekammer (7), die durch die radiale Trennung (11) getrennt werden, jeweils mit einer querlaufenden Wand (15a, 15b) zum Verschließen der besagten Enden (14a, 14b) versehen sind, wobei die besagten querlaufenden Wände (15a, 15b) zum Verschließen nach oben aus dem Boden (9) der Wasserrückhaltekammer (7) überstehen und sich zwischen ihren äußeren und inneren (8a, 8b) Seitenwänden erstrecken.

14. Mulcheinrichtung mit Wasservorrat nach einem der Ansprüche 1 bis 13, **dadurch gekennzeichnet, dass** sie darüber hinaus zumindest eine Abstandsleiste (70) umfasst, und dadurch, dass der Mulch (1) mehrere konformierte Halterungen (60) umfasst, um Abstandsleisten (70) zu tragen, wobei jede Halterung (60) konform ist, um ein Ende einer Abstandsleiste (70) auf dem Mulch (1) festzuhalten.

15. Mulcheinrichtung mit Wasservorrat nach einem der Ansprüche 1 bis 4 und 7 bis 14, **dadurch gekennzeichnet, dass** die besagte Einrichtung umfasst:
- einerseits einen Mulch, der durch eine lichtdichte und wasserdurchlässige Scheibe gebildet wird, wobei diese Scheibe aus einem flexiblen Material gefertigt ist, das mit einer zentralen Öffnung und einem radialen Spalt versehen ist, mit dem durch Trennen der Enden, die durch diesen radialen Spalt eingegrenzt werden, ein Durchlass erstellt werden kann, über den man auf die zentrale Öffnung zugreift, und,
- andererseits ein Tropfbewässerungssystem, eine ringförmige Wasserrückhaltekammer oder einen Wasservorrat umfassend, die/ der zwei Seitenwände und einen Boden umfasst, der mit im Abstand angeordneten Perforationen mit reduziertem Durchmesser versehen ist, wobei die Innenwand der besagten Kammer in ihrem oberen Abschnitt einen Falz oder eine kreisförmige Schulter umfasst, anhand derer der kreisförmige Mulch in den besagten oberen Abschnitt eingefalzt werden kann, sodass sich der Mulch oberhalb des besagten Wasservorrats angeordnet befindet.

## Claims

1. A mulching device with water reserve for the cultivation of plants, particularly plants raised in pots, of the type comprising a mulching (1) comprising a covering and surrounding surface (2) which is opaque, water-permeable and extending around a central opening (3), this mulching (1) being made of a deformable material and including a radial slot (4) allowing spacing the two ends (2a, 2b) thereof apart from each other to enable its positioning around the stem (T) of a plant (PL), wherein the inner edge and the outer edge of the covering and surrounding surface (2) are provided, respectively, with an inner flange (16b) and outer flange (16a), concentric and upwardly directed, said mulching device being **characterized in that** it comprises a dripping system cooperating in a superimposed or superimposable manner with said mulching (1), wherein said dripping system comprises an annular water retention chamber (7) forming a water reserve disposed below the covering and surrounding surface (2) of the mulching (1), this water retention chamber (7) comprising two lateral walls, respectively outer and inner walls, (8a, 8b), and a bottom (9) provided with spaced perforations (18), said water retention chamber (7) being supplied with spraying water and/or by rain water passing through the covering and surrounding surface (2) of said mulching (1), and it has a radial interruption or cut (11) allowing spacing the two ends (14a, 14b) thereof apart from each other, so as to allow its positioning around the stem (T) of said plant (PL).

2. The mulching device with water reserve, according to claim 1, **characterized in that** the assembly consisting of the superimposed mulching (1) and the water retention chamber (7), is shaped to allow its positioning in or on the upper portion of a cultivation pot.

3. The mulching device with water reserve, according to any of claims 1 or 2, **characterized in that** the mulching (1) is made of a flexible shape memory material.

4. The mulching device with water reserve, according to any one of claims 1 to 3, **characterized in that** the covering and surrounding surface (2) of said mulching (1) is made of an impermeable material and **in that** it is provided with perforations (18) conferring its water permeability property thereto.

5. The mulching device with water reserve, according to any one of claims 1 to 4, **characterized in that** the edge of the central opening (3) and the peripheral edge of the mulching (1) are equipped, respectively, with the inner flange (16b) and outer flange (16a) concentric and upwardly directed.

6. The mulching device with water reserve, according to any one of claims 1 to 5, **characterized in that** the circumferential outer edge of the covering and surrounding surface (2) of the mulching (1) is provided with a downwardly directed peripheral outgrowth (17).

7. The mulching device with water reserve, according to claim 6, **characterized in that** the peripheral outgrowth (17) has a truncated cone or truncated pyramid shape flared downwards.

8. The mulching device with water reserve, according to any one of claims 1 to 7, **characterized in that** the space delimiting the upper edges of the lateral walls (8a, 8b) of the water retention chamber (7) of the dripping system (6), has a width identical or substantially identical to the width of the covering and surrounding surface (2) of said mulching (1).

9. The mulching device with water reserve, according to any one of claims 1 to 8, usable in relation with cultivation pots of truncated cone shape, **characterized in that** the lateral outer wall (8a) of the water retention chamber (7) of the dripping system (6) has the shape of a truncated cone, inverted and flared upwards, whose dimensions and angle of inclination (α) of its lateral surface are identical to the dimensions and the angle of inclination (α'), respectively, of the inverted truncated cone delimited by the inner wall of the upper portion of said pots.

10. The mulching device with water reserve, according to any one of claims 1 to 9, **characterized in that** the water retention chamber (7) of the dripping system (6) is made of a flexible material, preferably a shape memory material, allowing spacing the ends (14a, 14b) thereof apart from each other in order to create a passage leading into its central opening, so as to enable its positioning around the stem (T) of a plant (PL).

11. The mulching device with water reserve, according to any one of claims 1 to 10, **characterized in that** the water retention chamber (7) further comprises an inner self-filtering film (19).

12. The mulching device with water reserve, according to any one of claims 1 to 11, **characterized in that** the ends (2a, 2b) of the covering and surrounding surface (2) separated by the radial slot (4) are each provided with a transverse obturation wall (21a, 21b) of said ends (2a, 2b), said transverse obturation walls (21a, 21b) protruding upwardly from the covering and surrounding surface (2) and extending between the inner and outer flanges (16a, 16b).

13. The mulching device with water reserve, according to any one of claims 1 to 12, **characterized in that** the ends (14a, 14b) of the water retention chamber (7) separated by the radial cut (11) are each provided with a transverse obturation wall (15a, 15b) of said ends (14a, 14b), said transverse obturation walls (15a, 15b) protruding upwardly from the bottom (9) of the water retention chamber (7) and extend between the inner and outer lateral walls (8a, 8b) thereof.

14. The mulching device with water reserve, according to any one of claims 1 to 13, **characterized in that** it further comprises at least one spacing gib (70), and **in that** the mulching (1) includes a plurality of supports (60) shaped to support spacing gibs (70), each support (60) being shaped to maintain one end of a spacing gib (70) fixed on the mulching (1).

15. The mulching device with water reserve, according to any one of claims 1 to 4 and 7 to 14, **characterized in that** said device includes:
- on the one hand, a mulching constituted by an opaque and water-permeable disk, this disk made of a flexible material being provided with a central opening and a radial slot allowing establishing by spacing the ends delimited by this radial slot, a passage giving access to the central opening and,
- on the other hand, a dripping system comprising an annular water retention chamber or water reserve comprising two lateral walls and a bottom provided with spaced perforations of reduced diameter, the inner wall of said chamber including in its upper portion a rabbet or a circular shoulder allowing the embedment of the circular mulching into said upper portion, so that the mulching is disposed above said water reserve.
